# EUROPEAN PATENT APPLICATION

(11) **EP 4 528 508 A1**
(43) Date of publication of application: **26.03.2025**
(21) Application number: 23806809.2
(22) Date of filing: 11.05.2023
(51) Int. Cl.: G06F 9/50

(54) **SERVICE PROCESSING METHOD AND APPARATUS, AND RELATED DEVICE THEREOF**

(30) Priority: 17.05.2022 CN 202210536777
(71) Applicant: Datang Mobile Communications Equipment Co., Ltd., Beijing 100085 (CN)
(72) Inventor: WANG, Yapeng, Beijing 100085 (CN); LIU, Xianfeng, Beijing 100085 (CN); CHENG, Zhimi, Beijing 100085 (CN)
(74) Representative: Studio Torta S.p.A.
(86) International application number: PCT/CN2023/093516
(87) International publication number: WO 2023/221857

(57) **Abstract**

Disclosed are a service processing method and apparatus, and a related device thereof. The method comprises: a target node generating, according to a service requirement of a service to be executed of a terminal, planned paths corresponding to service processing stages for said service, and sending to the terminal the planned paths, which correspond to the service processing stages, wherein any planned path is used for routing service data of said service of the terminal to a computing-power node, which performs service processing at a corresponding service processing stage.

## Description

### CROSS REFERENCE TO RELATED APPLICATIONS

The present application claims priority to Chinese Patent Application No. 2022105367774 filed in China on May 17, 2022, the entire content of which is incorporated herein by reference.

### TECHNICAL FIELD

The present disclosure relates to the field of wireless communication technology, and specifically relates to a service processing method and apparatus, and a related device thereof.

### BACKGROUD

At present, service data of a terminal can be processed locally at the terminal, however, the way of processing service data locally at the terminal will take up a large amount of storage space and computing power of the terminal, and optimal resource utilization cannot be realized. In order to improve utilization rate of resources, the terminal can send service data to the computing power node on the network side for processing. This approach could fully utilize the network bandwidth resources for service data transmission only with combination with the real-time status of the network.

In related art, a planning path is orchestrated for the terminal through a computing power network orchestration management system or through an entrance computing power routing node, and the terminal may send service data to a corresponding computing power node for service processing according to the above planning path.

In the aforementioned approach, the computing power network orchestration management system or the entrance computing power routing node can only orchestrate one planning path for the terminal at a time, however, providing computation services for the terminal only through the computing power nodes on a single planning path may not achieve optimal utilization of the computing power resources.

### SUMMARY

Embodiments of the present disclosure provide a service processing method and apparatus, and a related device thereof.

According to an embodiment of an aspect of the present disclosure, a service processing method is provided, said method is executed by a target node and said method includes:
receiving a service requirement of a service to be executed sent by a terminal;
generating, according to said service requirement, planning paths corresponding to respective service processing stages of said service to be executed; and
sending to said terminal the planning paths corresponding to said respective service processing stages,
wherein any one of said planning paths is configured to route service data of the service to be executed of said terminal to a computing power node that carries out service processing in the corresponding service processing stage.
In some embodiments, a service scenario corresponding to said service to be executed is carried in said service requirement;
said generating, according to said service requirement, planning paths corresponding to the respective service processing stages of said service to be executed includes:
dividing, according to said service scenario, the respective service processing stages corresponding to said service to be executed; and
generating, according to said service requirement, the planning paths corresponding to said respective service processing stages,
wherein the computing power node that carries out service processing in said any one of said planning paths matches said service requirement.

In some embodiments, said service requirement includes a network requirement and/or a computing power requirement,
wherein said network requirement includes a required transmission time delay and/or a required network bandwidth;
wherein said computing power requirement includes at least one of a type of a required computing power node, a number of required computing power node cores, and a location of a required computing power node.

In some embodiments, said generating, according to said service requirement, the planning paths corresponding to said respective service processing stages includes:
generating, for a first service processing stage in said respective service processing stages, first candidate paths between said terminal and respective candidate computing power nodes;
determining the transmission time delay and/or the network bandwidth of said respective first candidate paths and determining computing power resource information of the candidate computing power nodes corresponding to said respective first candidate paths, according to target resource information; and
determining a first planning path corresponding to said first service processing stage from said respective first candidate paths,
wherein the transmission time delay and/or the network bandwidth of said first planning path matches said network requirement, and/or the computing power resource information of the candidate computing power node corresponding to said first planning path matches said computing power requirement.

In some embodiments, said generating, according to said service requirement, the planning paths corresponding to said respective service processing stages includes:
generating, for a non-first service processing stage of said respective service processing stages, second candidate paths between the computing power node that carries out service processing in a previous service processing stage of said non-first service processing stage and respective candidate computing power nodes;
determining the transmission time delay and/or the network bandwidth of said respective second candidate paths and determining computing power resource information of the candidate computing power nodes corresponding to said respective second candidate paths, according to target resource information; and
determining a second planning path corresponding to said non-first service processing stage from said respective second candidate paths,
wherein the transmission time delay and/or the network bandwidth of said second planning path matches said network requirement, and/or the computing power resource information of the candidate computing power node corresponding to said second planning path matches said computing power requirement.

In some embodiments, said target resource information includes at least one of the following:
a status of network resources in an area under the jurisdiction of said target node;
a status of computing power resources in the area under the jurisdiction of said target node;
a status of applications deployed in the area under the jurisdiction of said target node.

In some embodiments, the computing power node that carries out service processing in said respective planning paths is a sub-computing power node in a virtual computing power node, said sub-computing power node includes a virtual machine or a container.

According to an embodiment of another aspect of the present disclosure, another service processing method is provided, said method is executed by a terminal, and said method includes:
sending to a target node a service requirement of a service to be executed, wherein said service requirement is configured to generate planning paths corresponding to respective service processing stages of said service to be executed; and
receiving the planning paths corresponding to said respective service processing stages sent by said target node,
wherein any one of said planning paths is configured to route service data of the service to be executed of said terminal to a computing power node that carries out service processing in a corresponding service processing stage.

In some embodiments, a service scenario corresponding to said service to be executed is carried in said service requirement, and said service scenario is configured to divide the respective service processing stages corresponding to said service to be executed.

In some embodiments, said service requirement includes a network requirement and/or a computing power requirement,
wherein said network requirement includes a required transmission time delay and/or a required network bandwidth;
wherein said computing power requirement includes at least one of a type of a required computing power node, a number of required computing power node cores, and a location of a required computing power node.

In some embodiments, said method further includes:
sending, according to a planning path corresponding to a first service processing stage in said respective service processing stages, to the computing power node that carries out service processing in said first service processing stage, the service data corresponding to said service to be executed and a planning path corresponding to the non-first service processing stage, so as to enable the computing power node that carries out service processing in said first service processing stage to carry out first processing of said service data, and after obtaining a first processing result, sending, according to the planning paths corresponding to said non-first service processing stage, the first processing result to the computing power nodes that carry out service processing in said non-first service processing stage.

In some embodiments, said method further includes:
receiving a second processing result corresponding to the service data sent by the computing power node that carries out service processing in the last service processing stage of the respective service processing stages;
   or,
receiving a second processing result transmitted by the computing power node that carries out service processing in the last service processing stage along the planning paths corresponding to the respective service processing stages;
   or,
receiving a second processing result, which is sent, in accordance with a third planning path, by the computing power node that carries out service processing in the last service processing stage, wherein the third planning path is a path between the terminal and the computing power node that carries out service processing in the last service processing stage obtained by planning of the target node according to the target resource information.

In some embodiments, said target resource information includes at least one of the following:
a status of network resources in an area under the jurisdiction of said target node;
a status of computing power resources in the area under the jurisdiction of said target node;
a status of applications deployed in the area under the jurisdiction of said target node.

According to an embodiment of another aspect of the present disclosure, a target node is provided, which includes:
a memory, a transceiver, and a processor, wherein
the memory is configured to store a computer program; the transceiver is configured to send and receive data under the control of said processor; and the processor is configured to read the computer program in said memory and execute the following operations of:
receiving a service requirement of a service to be executed sent by a terminal;
generating, according to said service requirement, planning paths corresponding to respective service processing stages of said service to be executed; and
sending to said terminal the planning paths corresponding to said respective service processing stages,
wherein any one of said planning paths is configured to route service data of the service to be executed of said terminal to a computing power node that carries out service processing in the corresponding service processing stage.

According to an embodiment of another aspect of the present disclosure, a terminal is provided, which includes:
a memory, a transceiver, and a processor, wherein
the memory is configured to store a computer program; the transceiver is configured to send and receive data under the control of said processor; and the processor is configured to read the computer program in said memory and execute the following operations of:
sending to a target node a service requirement of a service to be executed, wherein said service requirement is configured to generate planning paths corresponding to respective service processing stages of said service to be executed; and
receiving the planning paths corresponding to said respective service processing stages sent by said target node,
wherein any one of said planning paths is configured to route service data of the service to be executed of said terminal to a computing power node that carries out service processing in a corresponding service processing stage.

According to an embodiment of another aspect of the present disclosure, a service processing apparatus is provided, which includes:
a receiving unit for receiving a service requirement of a service to be executed sent by a terminal;
a generating unit for generating, according to said service requirement, planning paths corresponding to respective service processing stages of said service to be executed; and
a sending unit for sending to said terminal the planning paths corresponding to said respective service processing stages,
wherein any one of said planning paths is configured to route service data of the service to be executed of said terminal to a computing power node that carries out service processing in the corresponding service processing stage.

According to an embodiment of another aspect of the present disclosure, another service processing apparatus is provided, which includes:
a sending unit for sending to a target node a service requirement of a service to be executed, wherein said service requirement is configured to generate planning paths corresponding to respective service processing stages of said service to be executed; and
a receiving unit for receiving the planning paths corresponding to said respective service processing stages sent by said target node,
wherein any one of said planning paths is configured to route service data of the service to be executed of said terminal to a computing power node that carries out service processing in a corresponding service processing stage.

According to an embodiment of another aspect of the present disclosure, a processor-readable storage medium is provided, characterized in that a computer program is stored on said processor-readable storage medium, wherein said computer program is configured to cause said processor to execute a service processing method according to any of the above described embodiments.

According to an embodiment of another aspect of the present disclosure, a computer program product is provided, which includes a computer program, wherein said computer program, when executed by a processor, realizes a service processing method according to any of the above described embodiments.

According to an embodiment of another aspect of the present disclosure, a computer program is provided, which includes a computer program code, which, when running on a computer, causes a computer to execute a service processing method according to any of the above described embodiments.

The service processing method and apparatus, and related device thereof provided by embodiments of the present disclosure generate, through a target node, according to the service requirement of the service to be executed of the terminal, planning paths corresponding to respective service processing stages of the service to be executed, and send to the terminal the planning paths corresponding to the respective service processing stages, wherein any one of the planning paths is used to route the service data of the service to be executed of the terminal to a computing power node that carries out service processing in a corresponding service processing stage. Thereby, a plurality of planning paths are orchestrated for the terminal by the target node according to the service requirement of the terminal, and the computing power nodes to which are routed by the plurality of planning paths carry out phased processing of the service data of the terminal, which can realize collaborative computation by a plurality of computing power nodes, thereby improving the utilization rate of the resources.

It should be understood that the contents described in the present section are not intended to identify key or important features of embodiments of the present disclosure, nor are they intended to limit the scope of the present disclosure. Other features of the present disclosure will be readily understood by the following specification.

### BRIEF DESCRIPTION OF THE DRAWINGS

The accompanying drawings are used for a better understanding of the present solution and do not constitute a limitation of the present disclosure. Therein:
Figure 1 is a schematic diagram of the current state of orchestration of a traditional computing power network of centralized architecture;
Figure 2 is a schematic diagram of the current state of orchestration of a traditional computing power network of distributed architecture;
Figure 3 is a schematic flow diagram of a service processing method provided by an embodiment of the present disclosure;
Figure 4 is a schematic flow diagram of another service processing method provided by an embodiment of the present disclosure;
Figure 5 is a schematic flow diagram of another service processing method provided by an embodiment of the present disclosure;
Figure 6 is a schematic diagram of a multipath orchestration architecture in a centralized architecture provided by an embodiment of the present disclosure;
Figure 7 is a schematic diagram of a multipath orchestration architecture in a distributed architecture provided by an embodiment of the present disclosure;
Figure 8 is a schematic flow diagram of another service processing method provided by an embodiment of the present disclosure;
Figure 9 is a schematic structural diagram of a target node provided by an embodiment of the present disclosure;
Figure 10 is a schematic structural diagram of a terminal provided by an embodiment of the present disclosure;
Figure 11 is a schematic structural diagram of a service processing apparatus provided by an embodiment of the present disclosure;
Figure 12 is a schematic structural diagram of another service processing apparatus provided by an embodiment of the present disclosure.

### DETAILED DESCRIPTION

The term "and/or" in embodiments of the present disclosure describes an association relationship of associated objects and indicates that three kinds of relationships may exist, for example, A and/or B may indicate that: A alone exists, both A and B exist, and B alone exists. The character "/" generally indicates an "or" relationship between preceding and following associated objects.

The term "a plurality of" in embodiments of the present disclosure refers to two or more, and other quantifiers are similar thereto.

The technical solutions in the embodiments of the present disclosure will be clearly and completely described below in conjunction with the accompanying drawings in the embodiments of the present disclosure, and it is obvious that the described embodiments are only a part of the embodiments of the present disclosure, and not all of the embodiments. All other embodiments obtained by a person of ordinary skill in the art based on the embodiments in the present disclosure without making creative labor fall within the scope of protection of the present disclosure.

In a current computing power network scenario, the computing power network orchestration management system can, according to the service requirement of the terminal, or the entrance computing power routing node can, after sensing the service requirement of the terminal, in combination with the network resource status and the computing power resource status, orchestrate forwarding and routing paths to schedule the service data of the terminal to be executed on an appropriate computing power node, thereby improving the utilization rate of the resources, wherein the path orchestration is an important step of the computing power network.

In the related art, a computing power user (for example, a terminal) puts forth a computing power usage requirement (including service requirements such as a location of a computing power node, a size of a computing power node, a network bandwidth, a transmission time delay, and the like), and the computing power network orchestration management system or the entrance computing power routing node, according to network resources and computing power resources that have already been managed, carries out a path orchestration, to schedule the service data of the computing power user to a computing power node that satisfies the computing power usage requirement, and that computing power node provides computing power services to the computing power user.

However, for certain service scenarios, network requirements (such as transmission time delay, network bandwidth, and the like) and computing power requirements in different service processing stages have different focuses, and if only one computing power node provides computing power services, it is not possible to optimally utilize the computing power resources and improve the service efficiency.

As an example, in the context of edge computing development, in the cloud-edge-end collaboration scenario, for end-side (i.e., end node, which refers to a computing node or computing power node closest to the terminal) services of low-time delay class, mainly an approach of local computing is used to provide computing services at a location close to the source of the data; and for services of high-computing class, computing services are provided by the cloud data center. However, in this scenario, only cloud-edge-end computing collaboration is realized, which does not have a centralized orchestration management system to enable collaborative scheduling with network resources, and in this scenario, collaboration and resource utilization of computing resources are realized mainly through network connection, and the network resources are not collaboratively scheduled according to real-time changes in network status, which brings about the problem of low utilization rate of the network resources.

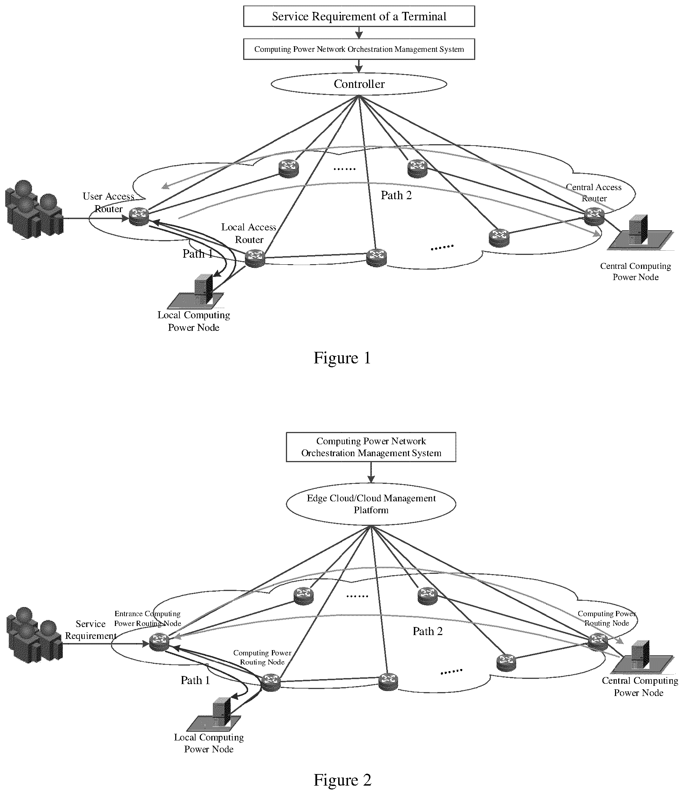

As another example, at the current computing power network development stage, path orchestration can be carried out through a computing power network orchestration management system of a centralized architecture as shown in Figure 1 or through a distributed entrance computing power routing node as shown in Figure 2. However, the aforementioned path orchestration approaches can only schedule the service data of the terminal to one appropriate computing power node for service processing at a single time, and it is not possible to realize differentiated path orchestration according to different service requirements (such as time delay requirements, computing power requirements, and the like) corresponding to different service processing stages, and there exists the problem that the network resources and the computing power resources cannot be optimally utilized. When different service requirements exist in different service processing stages, the terminal needs to orchestrate forwarding and routing paths again on the basis of the processing results of the first service processing stage after completing the service processing corresponding to the first service processing stage, that is, it needs to carry out computing power orchestration and scheduling for many times, which causes a waste of the network resources and the computing power resources.

Figure 1 and Figure 2 are illustrated only with two paths. The distance between the local computing power node and the terminal is less than the distance between the central computing power node and the terminal, for example, the local computing power node may be an end node, and the central computing power node may be an edge computing node, a core node, and the like. The edge computing node may be a Multi-access Edge Computing (MEC) device or an Application (App) server near the side of the Radio Access Network; the core node is a computing power node with centralized and powerful computing capacity.

That is to say, for certain service scenarios, network requirements and computing power requirements corresponding to different service processing stages may have different focuses, for example, in service scenarios of video surveillance and recognition class, surveillance data of the video source is directly transmitted to the data center for comparison and recognition, which will take up a large amount of bandwidth resources and computing power resources, and at the same time, transmission of the surveillance data of a large data amount also cannot guarantee time efficiency of the transmission. If the surveillance data is processed and recognized in the local computing power node, database resources of the data center also have to be cached in the local computing power node, which will also take up a large amount of storage space and computing capacity in the local computing power node, and optimal utilization of resources cannot be achieved. If the surveillance data is processed in the local computing power node, recognition task of high performance computing is performed in the cloud data center, which can optimally utilize the computing power resources, but it also needs to be combined with the real-time status of the network, in order to be able to make full use of the network bandwidth resources for the transmission of the surveillance data.

In summary, for certain service scenarios with different network requirements and computing power requirements in different service processing stages, it is not possible to optimally utilize the computing power resources and improve service efficiency when one computing power node is orchestrated to provide services through the computing power network orchestration management system or the entrance computing power routing node. Besides, when a plurality of computing power nodes are used to provide services through a plurality of paths, it is necessary to re-orchestrate the path for the terminal to reach the next computing power node that carries out service processing each time after the computing results have been returned to the terminal, which will cause a waste of network resources and computing power resources.

Therefore, in order to solve the aforementioned problems, embodiments of the present disclosure provide a service processing method and apparatus, and a related device thereof, wherein the method and the apparatus are conceived based on the same application, and as the method and the apparatus solve the problem with a similar principle, implementations of the apparatus and the method can be referenced to each other, and repetitions will not be made.

The service processing method and apparatus, and the related device thereof provided by the embodiments of the present disclosure will be described in detail below with reference to the accompanying drawings.

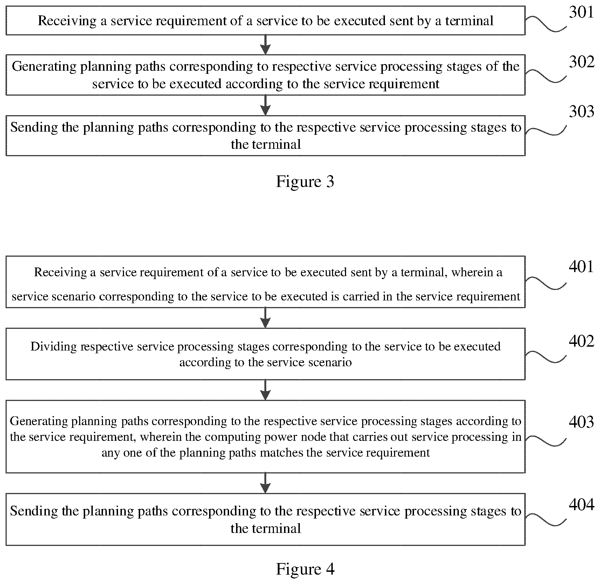

Figure 3 is a schematic flow diagram of a service processing method provided by an embodiment of the present disclosure.

The service processing method of an embodiment of the present disclosure may be executed by a target node. For example, the target node may be a computing power network orchestration management system (that is, the computing power network orchestration management system may be a stand-alone node), or a node at which the computing power network orchestration management system is located (for example, the computing power network orchestration management system may be an application, and the target node may be a node running the computing power network orchestration management system), or an entrance computing power routing node in the related art.

As shown in Figure 3, the service processing method may include the following steps 301-303.

In the step 301, a service requirement of a service to be executed sent by a terminal is received.

In an embodiment of the present disclosure, the terminal may be a device that provides voice and/or data connectivity to a user, a handheld device with wireless connection function, or other processing devices connected to a wireless modem, and the like. The name of the terminal may also be different in different systems, for example, in 5G system, the terminal may be referred to as User Equipment (UE). In specific, a wireless terminal may communicate with one or more Core Networks (CN) via a Radio Access Network (RAN), the wireless terminal may be a mobile terminal device, such as a mobile telephone (or referred to as a "cellular" telephone) and a computer having a mobile terminal device, for example may be a portable, pocket-sized, handheld, computer-built, or vehicle-mounted mobile apparatus that exchanges language and/or data with the Radio Access Network. For example, Personal Communication Service (PCS) telephone, cordless telephone, Session Initiated Protocol (SIP) phone, Wireless Local Loop (WLL) station, Personal Digital Assistant (PDA) and other devices. The wireless terminal may also be referred to as a system, a subscriber unit, a subscriber station, a mobile station, a mobile, a remote station, an access point, a remote terminal device (remote terminal), an access terminal device (access terminal), a user terminal device (user terminal), a user agent, a user apparatus (user device), and is not limited in the present disclosure

In an embodiment of the present disclosure, the service to be executed is a service to be executed by the terminal, such as a video service, a voice service, and the like.

In an embodiment of the present disclosure, the service requirement may include requirements such as network requirement, computing power requirement, and the like. In specific, the network requirement may include serving requirements such as requirement for transmission time delay, requirement for network bandwidth, and the like, and the computing power requirement may include serving requirements such as requirement for a type of a computing power node, requirement for a size of a computing power node (for example, the number of computing power node cores), and requirement for a location of a computing power node, or the like.

In specific, the type of the computing power node may include a Central Processing Unit (CPU), a Graphic Processing Units (GPU), a Field Programmable Gate Array (FPGA), an application specific integrated circuit (ASIC), and the like, and the present disclosure is not limited thereto.

In an embodiment of the present disclosure, the terminal may send to a target node a service requirement corresponding to a service to be executed, and accordingly, the target node may receive the service requirement sent by the terminal.

As an example, for service data of high security, the service requirement sent by the terminal may include requirement for a location of a computing power node and/or requirement for transmission time delay, and in the requirement for a location of a computing power node a location of the computing power node required by the terminal is carried, wherein the distance between the location of the computing power node required by the terminal and the location where the terminal is located is relatively short; and in the requirement for transmission time delay the transmission time delay at which the terminal is located is carried, wherein the transmission time delay required by the terminal is relatively small.

As another example, for service data of a high computation amount, the service requirement sent by the terminal may include requirement for a type of a computing power node and/or requirement for a size of a computing power node, wherein in the requirement for the type of the computing power node the type of the computing power node required by the terminal is carried, for example, the type of the computing power node may be CPU; and in the requirement for the size of the computing power node the size of the computing power node required by the terminal (for example, the number of computing power node cores, for example, 30) is carried.

As another example, for service data of time delay-sensitive class, the service requirement sent by the terminal may include requirement for transmission time delay and/or requirement for network bandwidth, wherein in the requirement for transmission time delay the transmission time delay required by the terminal is carried, which is relatively small, and in the requirement for network bandwidth the network bandwidth required by the terminal is carried, which is relatively high.

In the step 302, planning paths corresponding to respective service processing stages of the service to be executed are generated according to the service requirement.

In specific, any one of the planning paths is used to route the service data of the service to be executed of the terminal to a computing power node that carries out service processing in a corresponding service processing stage.

In an embodiment of the present disclosure, the target node, after receiving a service requirement, may divide a plurality of service processing stages for the service to be executed according to the service requirement, and orchestrate a corresponding planning path for each respective service processing stage. In specific, each planning path is used to route the service data of the service to be executed of the terminal to a computing power node that carries out service processing in a corresponding service processing stage.

In the step 303, the planning paths corresponding to the respective service processing stages are sent to the terminal.

In an embodiment of the present disclosure, the target node may, after generating the planning paths corresponding to the respective service processing stages, send the planning paths corresponding to the respective service processing stages to the terminal.

It would be appreciated that after the terminal receives the planning paths corresponding to the respective service processing stages, if the terminal executes the aforementioned service to be executed and obtains the service data corresponding to the service to be executed, the terminal may, according to the planning paths corresponding to the respective service processing stages, send the service data to computing power nodes that carry out service processing in the respective service processing stages, so that service processing will be processed in sequence by the computing power nodes that carry out service processing in the respective service processing stages.

That is, in an embodiment of the present disclosure, the terminal may, according to the planning path corresponding to a first service processing stage in the respective service processing stages, send, to the computing power node that carries out service processing in the first service processing stage, the service data corresponding to the service to be executed and the planning path corresponding to the non-first service processing stage, so as to enable the computing power node that carries out service processing in the first service processing stage to carry out first processing of the service data, and after obtaining a first processing result, send, according to the planning path corresponding to the non-first service processing stage, the first processing result to the computing power node that carries out service processing in the non-first service processing stage.

As an example, assuming that the number of service processing stages is n, wherein n is a positive integer greater than or equal to 2, the terminal, after receiving the planning paths corresponding to the n service processing stages sent by the target node, may send, according to the planning path corresponding to the first service processing stage, the service data of the service to be executed and the planning paths corresponding to the n-1 non-first service processing stages, to the computing power node that carries out service processing in that first service processing stage.

Assuming n=2, the first service processing stage is denoted as stage 1, and the computing power node to which is routed by the planning path of the stage 1 is computing power node A, and the second service processing stage is denoted as stage 2, and the computing power node to which is routed by the planning path of the stage 2 is computing power node B. The terminal, after receiving the planning paths corresponding to the respective service processing stages, may send the service data corresponding to the service to be executed and the planning path of the stage 2 to the computing power node A, and the computing power node A carries out first processing of the service data, and after obtaining a first processing result, sends the first processing result to the computing power node B according to the planning path of the stage 2, in order to carry out second processing of the first processing result by the computing power node B to obtain the second processing result.

Assuming n=3, the first service processing stage is denoted as stage 1, and the computing power node to which is routed by the planning path of the stage 1 is computing power node A, the second service processing stage is denoted as stage 2, and the computing power node to which is routed by the planning path of the stage 2 is computing power node B, and the third service processing stage is denoted as stage 3, and the computing power node to which is routed by the planning path of the stage 3 is computing power node C. The terminal, after receiving the planning paths corresponding to the respective service processing stages, may send the service data corresponding to the service to be executed, the planning path of the stage 2 and the planning path of the stage 3 to the computing power node A, and the computing power node A carries out first processing of the service data, and after obtaining a first processing result, sends the first processing result and the planning path of the stage 3 to the computing power node B according to the planning path of the stage 2, in order to carry out second processing of the first processing result by the computing power node B, and after obtaining a processing result, sends the above processing result to the computing power node C according to the planning path of the stage 3, in order to carry out third processing of the above processing result by the computing power node C.

The service processing method of an embodiment of the present disclosure generates, through a target node, according to the service requirement of the service to be executed of the terminal, planning paths corresponding to respective service processing stages of the service to be executed, and sends to the terminal the planning paths corresponding to the respective service processing stages, wherein any one of the planning paths is used to route the service data of the service to be executed of the terminal to a computing power node that carries out service processing in a corresponding service processing stage. Thereby, a plurality of planning paths are orchestrated for the terminal by the target node according to the service requirement of the terminal, and the computing power nodes to which are routed by the plurality of planning paths carry out phased processing of the service data of the terminal, which can realize collaborative computation by a plurality of computing power nodes, thereby improving the utilization rate of the resources.

Figure 4 is a schematic flow diagram of another service processing method provided by an embodiment of the present disclosure.

As shown in Figure 4, the service processing method may be executed by a target node and may include the following steps 401-404.

In the step 401, a service requirement of a service to be executed sent by a terminal is received, wherein a service scenario corresponding to the service to be executed is carried in the service requirement.

In an embodiment of the present disclosure, for different services to be executed, different service scenarios may exist. In specific, the service scenarios may include scenarios of video surveillance and recognition class (that is, target recognition scenarios), voice recognition scenarios, voice timbre conversion scenarios, and the like, and the present disclosure does not limit thereon.

The step 401 may be realized in a way of any one of the respective embodiments of the present disclosure, which are not limited by the embodiments of the present disclosure and will not be repeated.

In the step 402, respective service processing stages corresponding to the service to be executed are divided according to the service scenario.

In an embodiment of the present disclosure, the respective service processing stages corresponding to the service to be executed may be divided according to the service scenario.

As an example, taking a service scenario as a scenario of video surveillance and recognition class (that is, a target recognition scenario) as an example, the service to be executed may include two service processing stages, wherein the first (that is, the 1st) service processing stage may be a feature extraction stage, and the second service processing stage may be a target recognition stage.

As another example, taking a service scenario as voice timbre conversion scenario as an example, the service to be executed may include three service processing stages, wherein the first (that is, the 1st) service processing stage may be a feature extraction stage, the second service processing stage may be a timbre conversion stage, and the third service processing stage may be a voice restoration stage.

In the step 403, planning paths corresponding to the respective service processing stages are generated according to the service requirement, wherein the computing power node that carries out service processing in any one of the planning paths matches the service requirement.

In an embodiment of the present disclosure, planning paths corresponding to the respective service processing stages may be generated according to the service requirement. In specific, the computing power node that carries out service processing in each of the planning paths matches the service requirement.

In some embodiments, a service requirement corresponding to each service processing stage may also be put forward by the terminal, wherein the service requirement corresponding to each service processing stage may be different. The terminal may send the service requirements corresponding to the respective service processing stages to the target node, so that the target node can generate the planning paths corresponding to the respective service processing stages according to the service requirements corresponding to the respective service processing stages, wherein the computing power node that carries out service processing in the planning path corresponding to each service processing stage matches the service requirement of the corresponding service processing stage.

For example, for the scenario of video surveillance and recognition class (that is, target recognition scenario), the terminal may send to the target node the service requirement of the first service processing stage and the service requirement of the second service processing stage, and for example, the service requirement of the first service processing stage is time delay requirement (for example, requirement for low time delay) and/or network bandwidth requirement (for example, requirement for high network bandwidth), and the service requirement of the second service processing stage is computing power requirement (for example, requirement for high computation), and the computing power node that carries out service processing in the planning path corresponding to the first service processing stage generated by the target node matches the time delay requirement and/or network bandwidth requirement put forward by the terminal, and the computing power node that carries out service processing in the planning path corresponding to the second service processing stage matches the computing power requirement put forward by the terminal.

In the step 404, the planning paths corresponding to the respective service processing stages are sent to the terminal.

The step 404 may be realized in a way of any one of the respective embodiments of the present disclosure, which are not limited by the embodiments of the present disclosure and will not be repeated.

As an application scenario, taking the service to be executed as video service as an example, the service data corresponding to the service to be executed is video data, and assuming that the service scenario is the scenario of video surveillance and recognition class (that is, the target recognition scenario), then the target recognition scenario may include two service processing stages, which are respectively: the feature extraction stage and the target recognition stage, and then in an embodiment of the present disclosure, the target node may generate a corresponding planning path for the feature extraction phase, and the computing power node to which is routed by the planning path is used to perform feature extraction on the video data of the terminal, and the target node may also generate a corresponding planning path for the target recognition phase, and the computing power node to which is routed by the planning path is used to perform target recognition on video features.

Denoting the feature extraction phase as phase 1, the computing power node to which is routed by the planning path corresponding to the phase 1 as computing power node A, and denoting the target recognition phase as phase 2, the computing power node to which is routed by the planning path corresponding to the phase 2 as computing power node B, the terminal, after receiving the planning paths corresponding to the stage 1 and the stage 2 sent by the target node, may send the video data and the planning path of the stage 2 to the computing power node A, and after the computing power node A performs feature extraction on the video data, it sends the video features to the computing power node B according to the planning path of the stage 2 in order for the computing power node B to perform target recognition on the video features.

Through the service processing method of the embodiment of the present disclosure, by orchestrating a plurality of planning paths for a terminal by a target node according to the service requirement and the service scenario of the terminal, and by processing the service data of the terminal in phases by computing power nodes to which are routed by the plurality of planning paths, collaborative computation by a plurality of computing power nodes can be realized so as to improve the utilization rate of the resources.

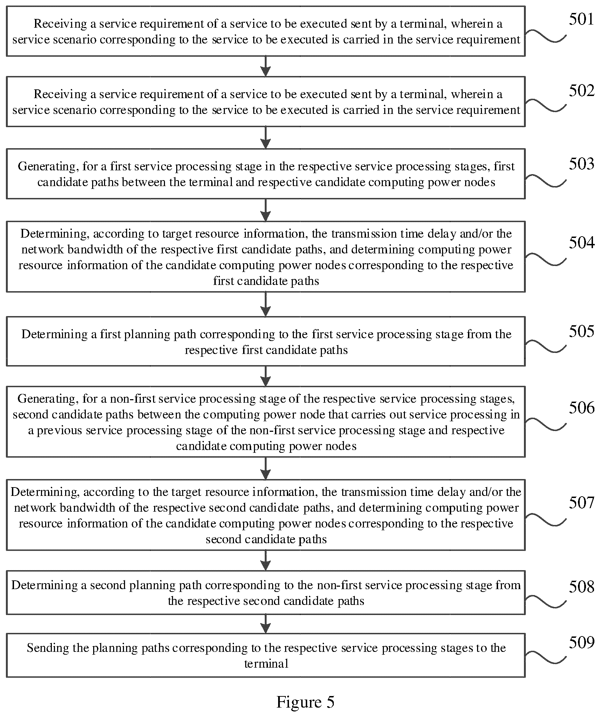

Figure 5 is a schematic flow diagram of another service processing method provided by an embodiment of the present disclosure.

As shown in Figure 5, the service processing method may be executed by a target node and may include the following steps 501-509.

In the step 501, a service requirement of a service to be executed sent by a terminal is received, wherein a service scenario corresponding to the service to be executed is carried in the service requirement.

In specific, the service requirement may include a network requirement and/or a computing power requirement, the network requirement may include a required transmission time delay and/or a required network bandwidth; the computing power requirement may include at least one of a type of a required computing power node, a number of required computing power node cores, and a location of a required computing power node.

In the step 502, respective service processing stages corresponding to the service to be executed are divided according to the service scenario.

The steps 501 to 502 may respectively be realized in a way of any one of the respective embodiments of the present disclosure, which are not limited by the embodiments of the present disclosure and will not be repeated.

In the step 503, for a first service processing stage in the respective service processing stages, first candidate paths between the terminal and respective candidate computing power nodes are generated.

In an embodiment of the present disclosure, for a first service processing stage in a plurality of service processing stages, the target node may generate paths between the terminal and respective candidate computing power nodes, which are denoted as first candidate paths in an embodiment of the present disclosure.

In the step 504, according to target resource information, the transmission time delay and/or the network bandwidth of the respective first candidate paths are determined, and computing power resource information of the candidate computing power nodes corresponding to the respective first candidate paths is determined.

In an embodiment of the present disclosure, the target resource information may include at least one of a status of network resources in an area under the jurisdiction of the target node (that is, a status of network resources that are managed by the target node), a status of computing power resources in the area under the jurisdiction of the target node (that is, a status of computing power resources that are managed by the target node), and a status of applications deployed in the area under the jurisdiction of the target node.

In an embodiment of the present disclosure, the computing power resource information may include information such as the types of computing power resources (for example, CPU, GPU, FPGA, and the like), the number of cores, the location, and the like, of the candidate computing power nodes.

In an embodiment of the present disclosure, the target node may determine, according to the target resource information, transmission time delays and/or network bandwidths of the respective first candidate paths, and the target node may also determine, according to the target resource information, computing power resource information of the candidate computing power nodes corresponding to the respective first candidate paths.

In the step 505, a first planning path corresponding to the first service processing stage is determined from the respective first candidate paths.

In an embodiment of the present disclosure, the target node may determine a first planning path corresponding to the first service processing stage from the respective first candidate paths, wherein the transmission time delay and/or the network bandwidth of the first planning path matches the network requirement in the service requirement, and/or the computing power resource information of the candidate computing power node corresponding to the first planning path matches the computing power requirement in the service requirement.

In specific, the candidate computing power node corresponding to the first planning path is the computing power node that carries out service processing in the first service processing stage.

In the step 506, for a non-first service processing stage of the respective service processing stages, second candidate paths between the computing power node that carries out service processing in a previous service processing stage of the non-first service processing stage and respective candidate computing power nodes are generated.

In an embodiment of the present disclosure, for a non-first service processing stage of the respective service processing stages, the target node may generate paths between the computing power node that carries out service processing in a previous service processing stage of the non-first service processing stage and respective candidate computing power nodes, which are denoted as second candidate paths in the embodiment of the present disclosure.

In the step 507, according to the target resource information, the transmission time delay and/or the network bandwidth of the respective second candidate paths are determined, and computing power resource information of the candidate computing power nodes corresponding to the respective second candidate paths is determined.

In an embodiment of the present disclosure, the target node may determine, according to target resource information, the transmission time delay and/or the network bandwidth of the respective second candidate paths, and determine, according to the target resource information, the computing power resource information of the candidate computing power nodes corresponding to the respective second candidate paths.

In the step 508, a second planning path corresponding to the non-first service processing stage is determined from the respective second candidate paths.

In an embodiment of the present disclosure, the target node may determine a second planning path corresponding to the non-first service processing stage from the respective second candidate paths, wherein the transmission time delay and/or the network bandwidth of the second planning path matches the network requirement in the service requirement, and/or the computing power resource information of the candidate computing power node corresponding to the second planning path matches the computing power requirement in the service requirement.

In specific, the candidate computing power node corresponding to the second planning path is a computing power node that carries out service processing in the non-first service processing stage.

In the step 509, the planning paths corresponding to the respective service processing stages are sent to the terminal.

In specific, any one of the planning paths is used to route the service data of the service to be executed of the terminal to a computing power node that carries out service processing in a corresponding service processing stage.

The step 509 may be realized in a way of any one of the respective embodiments of the present disclosure, which are not limited by the embodiments of the present disclosure and will not be repeated.

Through the service processing method of the embodiment of the present disclosure, by dividing a plurality of service processing stages for a service to be executed of a terminal by a target node according to a service scenario of the terminal, by orchestrating planning paths corresponding to the plurality of service processing stages according to a service requirement of the terminal, and by processing the service data of the terminal in phases by computing power nodes to which are routed by the plurality of planning paths, collaborative computation by a plurality of computing power nodes can be realized so as to improve the utilization rate of the resources.

It should be noted that, as shown in Figures 1 and 2, the traditional computing power network orchestration management system or computing power routing node orchestrates one complete path at the user access router or the entrance computing power routing node according to the service requirement of the terminal, and the entire service process needs to take up resources.

In contrast, in the embodiments of the present disclosure, the computing power network orchestration management system or the entrance computing power routing node may divide the service to be executed into a plurality of service processing stages according to the service requirement and orchestrate one planning path for each service processing stage, which may realize flexible allocation and dynamic orchestration of the computing power resources. The above process will be described in detail below in conjunction with Embodiment I and Embodiment II.

### Embodiment I: Flexible allocation of computing power resources.

1. The computing power network orchestration management system or the entrance computing power routing node generates a service chain according to a plurality of service processing stages, and plans segmented routing according to the service chain, that is, orchestrates a plurality of planning paths.
2. The orchestrated planning paths are sent down to the computing power forwarding layer to establish a network connection.
3. The service data of the terminal is transmitted to the computing power nodes selected by the computing power network orchestration management system or the entrance computing power routing node through the orchestrated segmented routing (that is, a plurality of planning paths) for service processing.
4. The service processing result of a previous service processing stage is used as the input for a next service processing stage in order to process the above service processing result again by the computing power node that carries out service processing in the next service processing stage.
5. For a computing power node that has finished processing of the service data, it can release the resources that have been taken up, that is, release the network resources and the computing power resources on the planning path corresponding to the previous service processing stage, thus realizing the flexible allocation of the resources and improving the utilization rate of the resources.

Embodiment II: Dynamic orchestration of computing power resources.

The traditional computing power network orchestration management system can, according to the service requirement of the terminal, orchestrate one complete path at the user access router, and schedule the service data to a certain computing power node for service processing, that is, all the paths to reach the computing power node are arranged at the location of the first access router node.

In contrast, in the embodiments of the present disclosure, dynamic orchestration of computing power resources can be realized, that is:
1. The computing power network orchestration management system or the computing power routing node can generate a service chain according to a plurality of service processing stages;
2. According to the service requirement corresponding to the first service processing stage of the service chain, the service data is orchestrated to the optimal computing power node in order to provide computing power service by that optimal computing power node;
3. The processing result of the first service processing stage is used as the input for the next service processing stage, and at the same time, real-time status of the network resource and the computing power resource is combined to carry out path orchestration and scheduling for the next service processing stage;
4. By analogy from this, segmented routing is planned in accordance with the service processing stages, that is, a plurality of planning paths are orchestrated, and an appropriate computing power node can be selected dynamically for each segment of the planning path according to the real-time resource status and the optimal path is orchestrated.

In any one of the embodiments of the present disclosure, the computing power nodes that carry out service processing in the respective planning paths may be sub-computing power nodes in virtual computing power nodes, wherein the sub-computing power node may include a VM (Virtual Machine), a container, and the like.

The above described process will be described in detail below in conjunction with Embodiment III.

### Embodiment III: Virtualization of computing power resources.

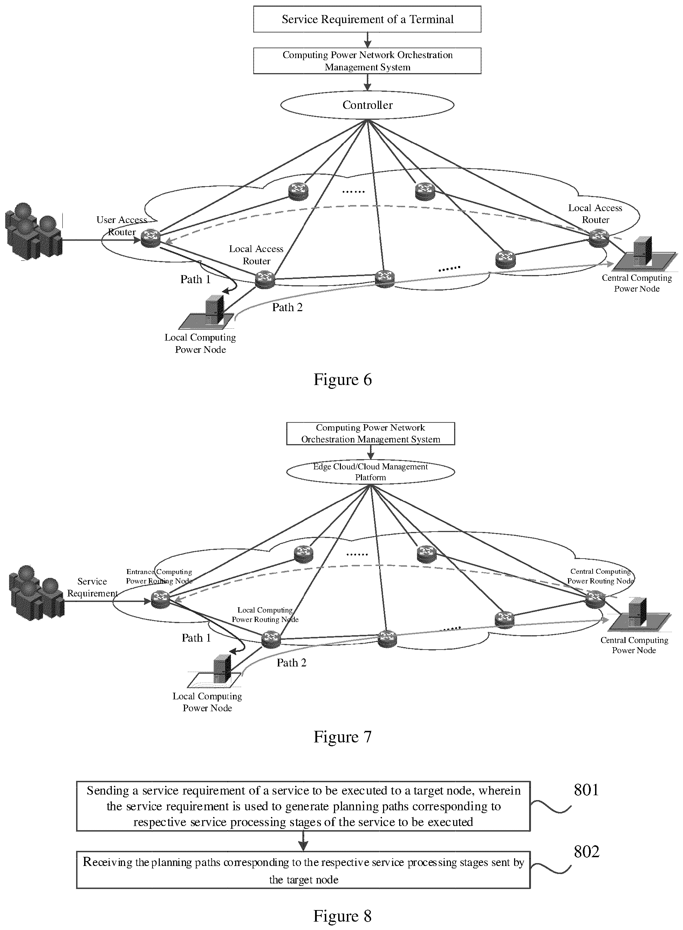

It will be exemplified with the target node as the computing power network orchestration management system or the entrance computing power routing node. As shown in Figure 6 or Figure 7, for service scenarios with different network requirements and computing power requirements for different service processing stages, the computing power network orchestration management system or the entrance computing power routing node can make division into the different service processing stages according to the service scenarios and form a service chain.

The computing power network orchestration management system or the entrance computing power routing node can perform path orchestration for each service processing stage in the service chain, and schedule the service requirement of the terminal to an appropriate virtual computing power node.

In specific, it may logically divide into a plurality of sub-computing power nodes (that is, a plurality of VMs, a plurality of containers, and the like) within the virtual computing power node, and orchestrate the paths for the terminal to reach the a plurality of sub-computing power nodes according to the service requirement corresponding to the respective service processing stages in the service chain.

It would be appreciated that the service data of the terminal is processed on the plurality of sub-computing power nodes, which can realize collaborative work and load sharing by the plurality of sub-computing power nodes.

In some embodiments, after the plurality of sub-computing power nodes have completed service processing, the processing results of the plurality of sub-computing power nodes may be aggregated, and the aggregated result may be fed back to the terminal by the virtual computing power node.

Figure 8 is a schematic flow diagram of another service processing method provided by an embodiment of the present disclosure.

As shown in Figure 8, the service processing method may be executed by a terminal and may include the following steps 801-802.

In the step 801, a service requirement of a service to be executed is sent to a target node, wherein the service requirement is used to generate planning paths corresponding to respective service processing stages of the service to be executed.

In the step 802, the planning paths corresponding to the respective service processing stages sent by the target node are received.

In specific, any one of the planning paths is used to route service data of the service to be executed of the terminal to a computing power node that carries out service processing in a corresponding service processing stage.

In some embodiments, a service scenario corresponding to the service to be executed is carried in the service requirement, and the service scenario is used to divide the respective service processing stages corresponding to the service to be executed.

In some embodiments, the service requirement includes a network requirement and/or a computing power requirement, wherein the network requirement includes a required transmission time delay and/or a required network bandwidth; the computing power requirement includes at least one of a type of a required computing power node, a number of required computing power node cores, and a location of a required computing power node.

In some embodiments, the terminal may also send, according to the planning path corresponding to a first service processing stage in the respective service processing stages, the service data corresponding to the service to be executed and the planning path corresponding to a non-first service processing stage to the computing power node that carries out service processing in the first service processing stage, so as to enable the computing power node that carries out service processing in the first service processing stage to carry out first processing of the service data, and after obtaining a first processing result, send the first processing result to the computing power node that carries out service processing in the non-first service processing stage according to the planning path corresponding to the non-first service processing stage.

In some embodiments, a computing power node that carries out service processing in the last service processing stage of the respective service processing stages may, after processing the processing result sent by the computing power node that carries out service processing in the previous service processing stage and obtaining a processing result (which is denoted as a second processing result in the embodiments of the present disclosure), send the second processing result to the terminal.

As an example, the computing power node that carries out service processing in the last service processing stage may directly send the second processing result to the terminal, and accordingly, the terminal may receive the second processing result corresponding to the service data sent by the computing power node that carries out service processing in the last service processing stage.

As another example, the computing power node that carries out service processing in the last service processing stage may return the second processing result to the terminal along the original path, that is, the terminal may receive the second processing result transmitted by the computing power node that carries out service processing in the last service processing stage along the planning paths corresponding to the respective service processing stages.

As yet another example, the computing power node that carries out service processing in the last service processing stage may send, in accordance with the planning path re-orchestrated by the target node, the second processing result to the terminal, that is, the terminal may receive the second processing result, which is sent, in accordance with the third planning path, by the computing power node that carries out service processing in the last service processing stage, wherein the third planning path is a path between the terminal and the computing power node that carries out service processing in the last service processing stage obtained by planning of the target node according to the target resource information.

It should be noted that the explanatory description of the service processing method executed on the target node side in any of the above-described embodiments is also applicable to the service processing method executed on the terminal side in that embodiment, which is similarly realized in principle and will not be repeated herein.

The service processing method of an embodiment of the present disclosure, through a terminal, sends to a target node a service requirement for a service to be executed, wherein the service requirement is used to generate planning paths corresponding to respective service processing stages of the service to be executed, and receives the planning paths corresponding to the respective service processing stages sent by the target node. Thereby, by orchestrating a plurality of planning paths for the terminal by the target node according to the service requirement of the terminal, and by processing the service data of the terminal in stages by the computing power nodes to which are routed by the plurality of planning paths, collaborative computation by a plurality of computing power nodes can be realized, thereby improving the utilization rate of the resources.

In any one of the embodiments of the present disclosure, it is exemplified with the target node as the computing power network orchestration management system or the entrance computing power routing node. As shown in Figure 6 or Figure 7, for service scenarios with different network requirements and computing power requirements for different service processing stages, the computing power network orchestration management system or the entrance computing power routing node can divide the different service processing stages according to the service scenarios and form a service chain.

It should be noted that for scenarios in which the service requirement or the service processing stage cannot be subdivided, path orchestration can be performed in accordance with the main service requirement, and the service data can be scheduled to one computing power node for service processing, which is realized in the same way as the prior art, and will not be repeated here. For example, when the main service requirement is the network requirement (for example, requirement for transmission time delay), the service data can be scheduled to the local computing power node in Figure 6 or Figure 7 for service processing, or when the main service requirement is the computing power requirement, the service data can be scheduled to the central computing power node in Figure 6 or Figure 7 for service processing.

In specific, the distance between the local computing power node and the terminal is less than the distance between the central computing power node and the terminal.

The computing power network orchestration management system or the entrance computing power routing node maps the network requirement, computing power requirement required by each service processing stage in the service chain according to the service requirement of the service chain.

The computing power network orchestration management system or the entrance computing power routing node, in conjunction with the managed global resource situation, performs path orchestration for each service processing stage in the service chain, that is, orchestrates the optimal computing power node for the service requirement of the first service processing stage to provide computing services for the terminal, and that computing node performs service processing and, after completing the processing, uses the computing power node of the first service processing stage as a source to orchestrate the path corresponding to the second service processing stage, that is, to orchestrate the planning path from the optimal computing power node corresponding to the first service processing stage to the next optimal computing power node, and by analogy from this, after the computing power node corresponding to the last service processing stage carries out service processing, the final processing result (which is denoted as the second processing result in the embodiments of the present disclosure) is returned to the terminal.

When the second processing result is fed back to the terminal, it can be returned along the original path, or the second processing result can be returned to the user access router or the entrance computing power routing node by performing path orchestration again by the computing power network orchestration management system.

It should be noted that Figure 6 and Figure 7 are exemplified by only orchestrating two planning paths, but the present disclosure is not limited thereto.

The above process will be described in detail below in conjunction with Embodiment IV.

### Embodiment IV: Multipath orchestration of computing power network.

The computing power network orchestration management system or the computing power routing node, when acquiring the service requirement of the terminal, first analyzes the service requirement and determines whether it is possible to disassemble the different service requirements in accordance with the service processing stages. If it is not possible, one planning path that can satisfy the service requirement is selected in accordance with the traditional computing power network orchestration scheme, and the service data is scheduled to the selected computing power node for service processing; if it is possible, the resource orchestration will be performed in the following manner:

### 1. Classification of service requirement

When a computing power user (for example, a terminal) puts forward a computing power usage requirement, the computing power network orchestration management system or the entrance computing power routing node divides different service processing stages according to the service requirement, and generates a service chain according to the respective service processing stages divided, and generates the network requirement, the computing power requirement, and the like, corresponding to the respective service processing stages in the service chain.

For example, the computing power network orchestration management system or the entrance computing power routing node divides two service processing stages, which respectively are service processing stage 1 and service processing stage 2, according to the service scenario (for example, the scenario of video surveillance and recognition type) carried in the service requirement, wherein the service requirement corresponding to the service processing stage 1 may be a requirement of low-time delay class, and the service requirement corresponding to the service processing stage 1 may be a requirement of high-computation class.

### 2. The computing power orchestration management system performs path orchestration for the service requirement of the service processing stage 1

As shown in Figure 6, in the centralized architecture, the computing power network orchestration management system can, according to indicators of the service processing stage 1 of the terminal: requirement of low-time delay class, in combination with situation of the managed computing power resource, status of the network resource, and deployment situation of local application instances, orchestrate path 1 between the terminal and the local computing power node, and sends routing information corresponding to the path 1 down to the user access router, in order to schedule the service data of the terminal to the local computing power node through the routing information, and the local computing power node provides computing services for the terminal.

In specific, the management scope of the computing power network orchestration management system is generally a province or a country.

As shown in Figure 7, in the distributed architecture, the entrance computing power routing node can, according to indicators of the service processing stage 1 of the terminal: requirement of low-time delay class, in combination with situation of the sensed computing power resource, status of the network resource, and deployment situation of local application instances, orchestrate path 1 from the terminal to the local computing power node, and generates a routing forwarding entry corresponding to the path 1 (including routing information), in order to schedule the service data of the terminal to the local computing power node through the routing forwarding entry, and the local computing power node provides computing services for the terminal.

For example, the local computing power node can perform processing, feature extraction, and the like, on the video data, and its processing results can be used as a data source for the service processing stage 2.

### 3. The computing power orchestration management system performs path orchestration for the service requirement of the service processing stage 2

As shown in Figure 6, in the centralized architecture, on the basis of the service processing stage 1, the computing power network orchestration management system uses the output result of the application instance (Service ID) of the service processing stage 1 (that is, the application in the local computing power node performs the first processing of the service data, and the output result of the application instance is the first processing result) as the source of the data, and according to demand on indicators of the service processing stage 2 of the terminal: requirement of high computation class, in combination with situation of the managed computing power resource, status of the network resource, deployment situation of central application instances, and the like, orchestrates path 2 from the local computing power node to the central computing power node, and sends routing information corresponding to the path 2 down to the local access router, so that the central computing power node provides computing services for the terminal.

As shown in Figure 7, in the distributed architecture, on the basis of the service processing stage 1, the local computing power routing node uses the output result of the application instance (Service ID) of the service processing stage 1 (that is, the first processing result) as the source of the data, and according to demand on indicators of the service processing stage 2 of the terminal: requirement of high computation class, in combination with situation of the sensed computing power resource, status of the network resource, deployment situation of central application instances, and the like, orchestrates path 2 from the local computing power node to the central computing power node, and generates a routing forwarding entry corresponding to the path 2, in order to schedule the first processing result to the central computing power node through the routing forwarding entry, and the central computing power node provides further computing services for the terminal.

For example, the central computing node may compare and recognize the first processing result output by the local computing power node with the data of the central database, and the like, and its output result may be used as the final second processing result, and the second processing results may be fed back to the terminal.

### 4. The final second processing result of the service data is fed back to the terminal

The central computing power node feeds the final second processing result back to the terminal, which for example may be in accordance with the original path, or through the computing power network orchestration management system for path re-orchestration, so as to return the second processing to the user access router or the entrance computing power routing node.

In summary, the technical solutions provided by the embodiments of the present disclosure have the following advantages:
1. A computing power user (for example, a terminal) puts forward a service requirement, and the computing power network orchestration management system or the entrance computing power routing node is able to perform division of different service processing stages as well as division of network requirement and computing power requirement corresponding to different service processing stages to form a service chain;
2. The computing power network orchestration management system or the entrance computing power routing node, according to the service requirement (network requirement and/or computing power requirement) of the first service processing stage in the service chain, orchestrates forwarding and routing the first planning path, selects an appropriate computing power node, and performs path scheduling;
3. The computing power network orchestration management system or the local computing power routing node, according to the service requirement (network requirement and/or computing power requirement) of the non-first service processing stage in the service chain, in combination with the output result of the application instance (Service ID) of the first planning path, orchestrates forwarding and routing the second planning path, selects an appropriate computing power node, and performs path scheduling;
4. The computing power resource is virtualized, the computing power network orchestration management system or the entrance computing power routing node, according to the service requirement of the terminal, orchestrates the optimal path to the appropriate virtual computing power node, and further orchestrates paths to reach a plurality of sub-computing power nodes within the virtual computing power node, so that the service data can be processed on the plurality of sub-computing power nodes, and collaborative work and load sharing by multiple nodes can be realized;
5. The computing power network orchestration management system or the computing power routing node orchestrates a plurality of planning paths, uses the processing result of the previous service processing stage as the input for the next service processing stage, and when scheduling the planning path corresponding to the next service processing stage, can release network resource and computing power resource on the planning path corresponding to the previous service processing stage;
6. The computing power network orchestration management system or the computing power routing node orchestrates a plurality of planning paths, and each segment of the planning path, according to the real-time resource status, can dynamically select an appropriate computing power node, and orchestrate to obtain the optimal path.

That is to say, under a service scenario with different network requirements and computing power requirements at different service processing stages, through the approach of realizing orchestration of a plurality of planning paths through the computing power network, the problem can be solves that the computing power network orchestration management system or the computing power routing node cannot efficiently utilize the computing power resources by singly performing the path orchestration, which improves the efficiency of utilizing the computing power resources and improves the service efficiency of the applications on the computing power nodes. Furthermore, by orchestrating a plurality of planning paths at a time, the waste of network resources and computing power resources can be reduced.

The technical solutions provided by the embodiments of the present disclosure may be applicable to a variety of systems, such as 5G system. For example, the applicable systems may be Global System of Mobile communication (GSM), Code Division Multiple Access (CDMA) system, Wideband Code Division Multiple Access (WCDMA) system, General Packet Radio Service (GPRS) system, Long term evolution (LTE) system, LTE Frequency Division Duplex (FDD) system, LTE time division duplex (TDD) system, Long Term Evolution Advanced (LTE-A) system, Universal Mobile Telecommunication System (UMTS), Worldwide interoperability for Microwave Access (WiMAX) system, 5G New Radio (NR) system, and the like. The variety of systems all include a terminal and a network device. The system may also include core network parts such as Evolved Packet System (EPS), 5G System (5GS), and the like.

In order to realize the above described embodiments, an embodiment of the present disclosure also proposes a target node.

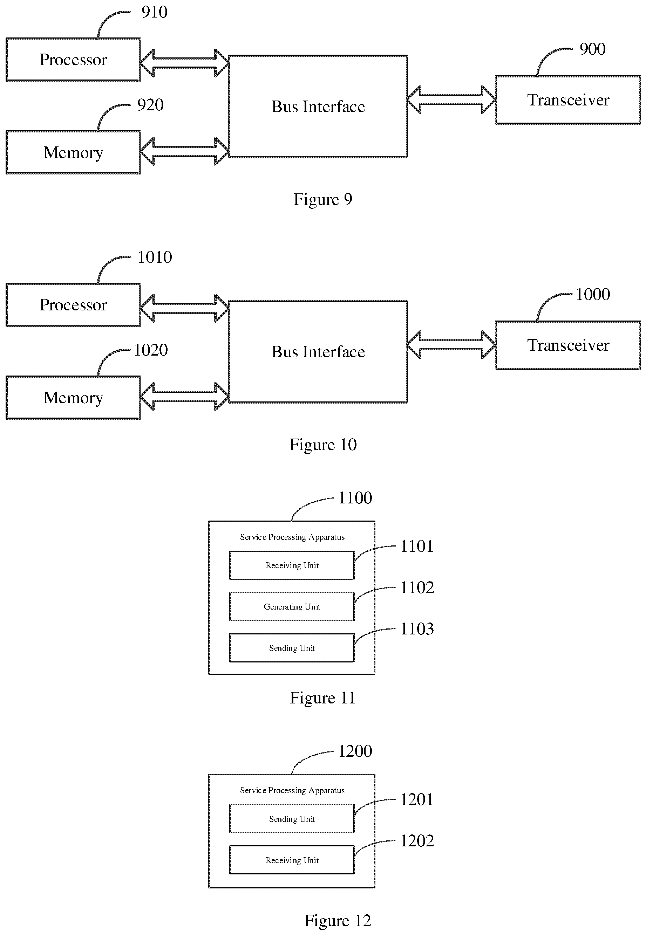

Figure 9 is a schematic structural diagram of a target node provided by an embodiment of the present disclosure.

As shown in Figure 9, the target node may include: a transceiver 900, a processor 910, and a memory 920.

In specific, the memory 920 is used to store a computer program; the transceiver 900 is used to send and receive data under the control of the processor 910; and the processor 910 is used to read the computer program in the memory 920 and perform the following operations of: receiving a service requirement of a service to be executed sent by a terminal; generating, according to the service requirement, planning paths corresponding to respective service processing stages of the service to be executed; sending to the terminal the planning paths corresponding to the respective service processing stages, wherein any one of the planning paths is configured to route service data of the service to be executed of the terminal to a computing power node that carries out service processing in the corresponding service processing stage.

The transceiver 900 is used to receive and send data under the control of the processor 910.

In Figure 9, the bus architecture may include any number of interconnected buses and bridges, and specifically link together various circuits such as one or more processors represented by the processor 910 and memories represented by the memory 920. The bus architecture may also link together various other circuits such as peripherals, voltage regulators, power management circuits, and the like, all of which are well known in the art and therefore will not be further described herein. The bus interface provides an interface. The transceiver 900 may be a plurality of elements, that is, may include a transmitter and a receiver, which provide units for communicating with a variety of other apparatuses over a transmission medium, which includes transmission media such as wireless channels, wired channels, fiber optic cables, and the like. The processor 910 is responsible for managing the bus architecture and usual processing, and the memory 920 may store data used by the processor 910 in performing operations.

The processor 910 may be a CPU, an ASIC, an FPGA, or a CPLD, and the processor 910 may also have a multi-core architecture.

In some embodiments, a service scenario corresponding to the service to be executed is carried in the service requirement;
said generating, according to the service requirement, planning paths corresponding to the respective service processing stages of the service to be executed includes:
dividing, according to the service scenario, the respective service processing stages corresponding to the service to be executed;
generating, according to the service requirement, the planning paths corresponding to the respective service processing stages,
wherein the computing power node that carries out service processing in the any one of the planning paths matches the service requirement.

In some embodiments, the service requirement includes a network requirement and/or a computing power requirement, wherein the network requirement includes a required transmission time delay and/or a required network bandwidth; the computing power requirement includes at least one of a type of a required computing power node, a number of required computing power node cores, and a location of a required computing power node.

In some embodiments, said generating, according to the service requirement, the planning paths corresponding to the respective service processing stages includes:
generating, for a first service processing stage of the respective service processing stages, first candidate paths between the terminal and respective candidate computing power nodes;
determining, according to target resource information, the transmission time delay and/or the network bandwidth of the respective first candidate paths, and determining computing power resource information of candidate computing power nodes corresponding to the respective first candidate paths; and
determining a first planning path corresponding to the first service processing stage from the respective first candidate paths,
wherein the transmission time delay and/or the network bandwidth of the first planning path matches the network requirement, and/or the computing power resource information of the candidate computing power node corresponding to the first planning path matches the computing power requirement.

In some embodiments, said generating, according to the service requirement, the planning paths corresponding to the respective service processing stages includes:
generating, for a non-first service processing stage of the respective service processing stages, second candidate paths between the computing power node that carries out service processing in a previous service processing stage of the non-first service processing stage and respective candidate computing power nodes;
determining, according to target resource information, the transmission time delay and/or the network bandwidth of the respective second candidate paths, and determining computing power resource information of the candidate computing power nodes corresponding to the respective second candidate paths; and
determining a second planning path corresponding to the non-first service processing stage from the respective second candidate paths,
wherein the transmission time delay and/or the network bandwidth of the second planning path matches the network requirement, and/or the computing power resource information of the candidate computing power node corresponding to the second planning path matches the computing power requirement.

In some embodiments, the target resource information includes at least one of the following: a status of network resources in an area under the jurisdiction of the target node; a status of computing power resources in the area under the jurisdiction of the target node; a status of applications deployed in the area under the jurisdiction of the target node.

In some embodiments, the computing power node that carries out service processing in the respective planning paths is a sub-computing power node in a virtual computing power node, the sub-computing power node includes a virtual machine or a container.

It should be noted herein that the target node provided by the embodiments of the present disclosure is capable of realizing all the method steps realized by the above described method embodiments of Figure 3 to Figure 5, and is capable of achieving the same technical effect, and the same portions of the embodiments of the present disclosure that are identical to the method embodiments and the beneficial effects will not be specifically repeated herein.

In order to realize the above described embodiments, an embodiment of the present disclosure also proposes a terminal.

Figure 10 is a schematic structural diagram of a terminal provided by an embodiment of the present disclosure.

As shown in Figure 10, the terminal may include: a transceiver 1000, a processor 1010, and a memory 1020.

In specific, the memory 1020 is used to store a computer program; the transceiver 1000 is used to send and receive data under the control of the processor 1010; and the processor 1010 is used to read the computer program in the memory 1020 and perform the following operations of: sending to a target node a service requirement of a service to be executed, wherein the service requirement is configured to generate planning paths corresponding to respective service processing stages of the service to be executed; and receiving the planning paths corresponding to the respective service processing stages sent by the target node, wherein any one of the planning paths is configured to route service data of the service to be executed of the terminal to a computing power node that carries out service processing in the corresponding service processing stage.

The transceiver 1000 is used to receive and send data under the control of the processor 1010.

In Figure 10, the bus architecture may include any number of interconnected buses and bridges, and specifically link together various circuits such as one or more processors represented by the processor 1010 and memories represented by the memory 1020. The bus architecture may also link together various other circuits such as peripherals, voltage regulators, power management circuits, and the like, all of which are well known in the art and therefore will not be further described herein. The bus interface provides an interface. The transceiver 1000 may be a plurality of elements, that is, may include a transmitter and a receiver, which provide units for communicating with a variety of other apparatuses over a transmission medium, which includes transmission media such as wireless channels, wired channels, fiber optic cables, and the like. The processor 1010 is responsible for managing the bus architecture and usual processing, and the memory 1020 may store data used by the processor 1010 in performing operations.

The processor 1010 may be a CPU, an ASIC, an FPGA, or a CPLD, and the processor 1010 may also have a multi-core architecture.

In some embodiments, a service scenario corresponding to the service to be executed is carried in the service requirement, and the service scenario is configured to divide respective service processing stages corresponding to the service to be executed.

In some embodiments, the service requirement includes a network requirement and/or a computing power requirement, wherein the network requirement includes a required transmission time delay and/or a required network bandwidth; wherein the computing power requirement includes at least one of a type of a required computing power node, a number of required computing power node cores, and a location of a required computing power node.

In some embodiments, the transceiver 1000 is used to execute the following operations of:

sending, according to the planning path corresponding to a first service processing stage in the respective service processing stages, to the computing power node that carries out service processing in the first service processing stage, the service data corresponding to the service to be executed and the planning path corresponding to the non-first service processing stage, so as to enable the computing power node that carries out service processing in the first service processing stage to carry out first processing of the service data, and after obtaining a first processing result, sending, according to the planning path corresponding to the non-first service processing stage, the first processing result to the computing power node that carries out service processing in the non-first service processing stage.

In some embodiments, the transceiver 1000 is further used to execute the following operations of:
receiving a second processing result corresponding to the service data sent by the computing power node that carries out service processing in the last service processing stage of the respective service processing stages;
   or,
receiving a second processing result transmitted by the computing power node that carries out service processing in the last service processing stage along the planning paths corresponding to the respective service processing stages;
   or,
receiving a second processing result, which is sent, in accordance with a third planning path, by the computing power node that carries out service processing in the last service processing stage, wherein the third planning path is a path between the terminal and the computing power node that carries out service processing in the last service processing stage obtained by planning of the target node according to the target resource information.

In some embodiments, the target resource information includes at least one of the following: a status of network resources in an area under the jurisdiction of the target node; a status of computing power resources in the area under the jurisdiction of the target node; a status of applications deployed in the area under the jurisdiction of the target node.

It should be noted herein that the terminal provided by the embodiments of the present disclosure is capable of realizing all the method steps realized by the above described method embodiment of Figure 8, and is capable of achieving the same technical effect, and the same portions of the embodiments of the present disclosure that are identical to the method embodiments and the beneficial effects will not be specifically repeated herein.

Corresponding to the above described service processing method provided by the embodiments of Figures 3 to 5, an embodiment of the present disclosure further provides a service processing apparatus, and because the service processing apparatus provided by the embodiment of the present disclosure corresponds to the above described service processing method provided by the embodiments of Figures 3 to 5, the embodiments of the service processing method are also applicable to the service processing apparatus provided by the embodiment of the present disclosure, and will not be described in detail in the embodiment of the present disclosure.

Figure 11 is a schematic structural diagram of a service processing apparatus provided by an embodiment of the present disclosure.

As shown in Figure 11, the service processing apparatus 1100 is applied to a target node and may include: a receiving unit 1101, a generating unit 1102, and a sending unit 1103.

The receiving unit 1101 is used to receive a service requirement of a service to be executed sent by a terminal.

The generating unit 1102 is used to generate, according to the service requirement, planning paths corresponding to respective service processing stages of the service to be executed.

The sending unit 1103 is used to send to the terminal the planning paths corresponding to the respective service processing stages.

In specific, any one of the planning paths is configured to route service data of the service to be executed of the terminal to a computing power node that carries out service processing in the corresponding service processing stage.

In some embodiments, a service scenario corresponding to the service to be executed is carried in the service requirement; and the generating unit 1102 is specifically used to divide, according to the service scenario, the respective service processing stages corresponding to the service to be executed; generate, according to the service requirement, the planning paths corresponding to the respective service processing stages, wherein the computing power node that carries out service processing in the any one of the planning paths matches the service requirement.

In some embodiments, the service requirement includes a network requirement and/or a computing power requirement, wherein the network requirement includes a required transmission time delay and/or a required network bandwidth; the computing power requirement includes at least one of a type of a required computing power node, a number of required computing power node cores, and a location of a required computing power node.

In some embodiments, the generating unit 1102 is specifically used to generate, for a first service processing stage in the respective service processing stages, first candidate paths between the terminal and respective candidate computing power nodes; determine the transmission time delay and/or the network bandwidth of the respective first candidate paths and determine computing power resource information of the candidate computing power nodes corresponding to the respective first candidate paths, according to target resource information; determine a first planning path corresponding to the first service processing stage from the respective first candidate paths, wherein the transmission time delay and/or the network bandwidth of the first planning path matches the network requirement, and/or the computing power resource information of the candidate computing power node corresponding to the first planning path matches the computing power requirement.

In some embodiments, the generating unit 1102 is specifically used to generate, for a non-first service processing stage of the respective service processing stages, second candidate paths between the computing power node that carries out service processing in a previous service processing stage of the non-first service processing stage and respective candidate computing power nodes; determine the transmission time delay and/or the network bandwidth of the respective second candidate paths and determine computing power resource information of the candidate computing power nodes corresponding to the respective second candidate paths, according to target resource information; determine a second planning path corresponding to the non-first service processing stage from the respective second candidate paths, wherein the transmission time delay and/or the network bandwidth of the second planning path matches the network requirement, and/or the computing power resource information of the candidate computing power node corresponding to the second planning path matches the computing power requirement.

In some embodiments, the target resource information includes at least one of the following: a status of network resources in an area under the jurisdiction of the target node; a status of computing power resources in the area under the jurisdiction of the target node; a status of applications deployed in the area under the jurisdiction of the target node.

In some embodiments, the computing power node that carries out service processing in the respective planning paths is a sub-computing power node in a virtual computing power node, the sub-computing power node includes a virtual machine or a container.

It should be noted herein that the above described service processing apparatus provided by the embodiments of the present disclosure is capable of realizing all the method steps realized by the above described method embodiments of Figures 3 to 5, and is capable of achieving the same technical effect, and the same portions of the embodiments of the present disclosure that are identical to the method embodiments and the beneficial effects will not be specifically repeated herein.

Corresponding to the above described service processing method provided by the embodiment of Figure 8, an embodiment of the present disclosure further provides a service processing apparatus, and because the service processing apparatus provided by the embodiment of the present disclosure corresponds to the above described service processing method provided by the embodiment of Figure 8, the embodiments of the service processing method are also applicable to the service processing apparatus provided by the embodiment of the present disclosure, and will not be described in detail in the embodiment of the present disclosure.

Figure 12 is a schematic structural diagram of another service processing apparatus provided by an embodiment of the present disclosure.

As shown in Figure 12, the service processing apparatus 1200 is applied to a terminal and may include: a sending unit 1201 and a receiving unit 1202.

The sending unit 1201 is used to send to a target node a service requirement of a service to be executed, wherein the service requirement is configured to generate planning paths corresponding to respective service processing stages of the service to be executed.

The receiving unit 1202 is used to receive the planning paths corresponding to the respective service processing stages sent by the target node.

In specific, any one of the planning paths is configured to route service data of the service to be executed of the terminal to a computing power node that carries out service processing in a corresponding service processing stage.

In some embodiments, a service scenario corresponding to the service to be executed is carried in the service requirement, and the service scenario is configured to divide the respective service processing stages corresponding to the service to be executed.

In some embodiments, the service requirement includes a network requirement and/or a computing power requirement, wherein the network requirement includes a required transmission time delay and/or a required network bandwidth; wherein the computing power requirement includes at least one of a type of a required computing power node, a number of required computing power node cores, and a location of a required computing power node.

In some embodiments, the sending unit 1201 is further used to: send, according to the planning path corresponding to a first service processing stage in the respective service processing stages, to the computing power node that carries out service processing in the first service processing stage, the service data corresponding to the service to be executed and the planning path corresponding to the non-first service processing stage, so as to enable the computing power node that carries out service processing in the first service processing stage to carry out first processing of the service data, and after obtaining a first processing result, send, according to the planning path corresponding to the non-first service processing stage, the first processing result to the computing power node that carries out service processing in the non-first service processing stage.

In some embodiments, the sending unit 1201 is further used to: receive a second processing result corresponding to the service data sent by the computing power node that carries out service processing in the last service processing stage of the respective service processing stages; or receive a second processing result transmitted by the computing power node that carries out service processing in the last service processing stage along the planning paths corresponding to the respective service processing stages; or receive a second processing result, which is sent, in accordance with a third planning path, by the computing power node that carries out service processing in the last service processing stage, wherein the third planning path is a path between the terminal and the computing power node that carries out service processing in the last service processing stage obtained by planning of the target node according to the target resource information.

In some embodiments, the target resource information includes at least one of the following: a status of network resources in an area under the jurisdiction of the target node; a status of computing power resources in the area under the jurisdiction of the target node; a status of applications deployed in the area under the jurisdiction of the target node.

It should be noted herein that the above described service processing apparatus provided by the embodiments of the present disclosure is capable of realizing all the method steps realized by the above described method embodiment of Figure 8, and is capable of achieving the same technical effect, and the same portions of the embodiments of the present disclosure that are identical to the method embodiments and the beneficial effects will not be specifically repeated herein.

It should be noted that the respective functional units in the respective embodiments of the present disclosure may be integrated in a single processing unit, or it is possible that the individual units are physically present separately, or it is also possible that two or more units are integrated in a single unit. The above-mentioned integrated units may be implemented either in the form of hardware or in the form of software functional units.

The integrated unit may be stored in a processor-readable storage medium if implemented in the form of a software functional unit and sold or used as a stand-alone product. Based on this understanding, the technical solution of the present disclosure essentially or a part, which contributes to the prior art, or all or part of the technical solution, may be embodied in the form of a software product, and the computer software product is stored in a storage medium and includes a number of instructions to cause a computer device (which may be a personal computer, a server, or a network device, and the like) or a processor to execute all or part of the steps of the methods of various embodiments of the present disclosure. The aforementioned storage medium includes a USB flash drive, a mobile hard disk, a Read-Only Memory (ROM), a Random Access Memory (RAM), a diskette or a CD-ROM, and various other media that can store program code.

In order to realize the above described embodiments, an embodiment of the present disclosure also proposes a processor-readable storage medium.

In specific, a computer program is stored on the processor-readable storage medium, and the computer program is configured to cause the processor to execute the service processing method of any of the embodiments of Figures 3 to 5 of the present disclosure.

In specific, the processor-readable storage medium may be any available medium or data storage device that the processor is able to access, including, but not limited to, a magnetic memory (for example, a floppy disk, a hard disk, a magnetic tape, a magnetic optical disk (MO), and the like), an optical memory (for example, a CD, a DVD, a BD, an HVD, and the like), and a semiconductor memory (for example, a ROM, an EPROM, an EEPROM, a non-volatile memory (NAND FLASH), a solid-state disk (SSD)).

In order to realize the above described embodiments, an embodiment of the present disclosure further proposes a processor-readable storage medium.

In specific, a computer program is stored on the processor-readable storage medium, and the computer program is configured to cause the processor to execute the service processing method according to the embodiment of Figure 8 of the present disclosure.

In specific, said processor-readable storage medium may be any available medium or data storage device that the processor is able to access, including, but not limited to, a magnetic memory (for example, a floppy disk, a hard disk, a magnetic tape, a magnetic optical disk (MO), and the like), an optical memory (for example, a CD, a DVD, a BD, an HVD, and the like), and a semiconductor memory (for example, a ROM, an EPROM, an EEPROM, a non-volatile memory (NAND FLASH), a solid-state disk (SSD)).

In order to realize the above described embodiments, an embodiment of the present disclosure further provides a computer program product including a computer program, said computer program, when executed by a processor, realizing the service processing method of any of the embodiments of Figures 3 to 5 of the present disclosure.

According to an embodiment of another aspect of the present disclosure, a computer program is provided, including a computer program code which, when running on a computer, causes said computer to execute the service processing method of any of the embodiments of Figures 3 to 5 of the present disclosure.

It should be noted that the foregoing explanatory description of the embodiments of the service processing method and apparatus also applies to the electronic device, the storage medium, the computer program product, and the computer program in the above described embodiments, and will not be repeated herein.

Those skilled in the art should understand that the embodiments of the present disclosure may be provided as methods, systems, or computer program products. Accordingly, the present disclosure may take the form of a fully hardware embodiment, a fully software embodiment, or an embodiment that combines software and hardware aspects. Further, the present disclosure may take the form of a computer program product implemented on one or more computer-usable storage media (including, but not limited to, disk memory and optical memory, and the like) that contain computer-usable program code therein.

The present disclosure has been described with reference to flowcharts and/or block diagrams of methods, devices (systems), and computer program products according to embodiments of the present disclosure. It should be understood that each flow and/or box in the flowchart and/or block diagram, and the combination of flows and/or boxes in the flowchart and/or block diagram, may be implemented by computer-executable instructions. These computer-executable instructions may be provided to a general-purpose computer, a specialized computer, an embedded processor, or a processor of other programmable data-processing device to produce a machine, to cause instructions executed through a computer or a processor of other programmable data processing device to produce means for implementing a function specified in one or more flows of a flowchart and/or one or more boxes of a block diagram.

These processor-executable instructions may also be stored in processor-readable memory capable of directing a computer or other programmable data processing device to operate in a particular manner, to cause instructions stored in the processor-readable memory to produce an article of manufacture including an instruction apparatus, and the instruction apparatus implements a function specified in one or more flows of the flowchart and/or one or more boxes of the block diagram.

These processor-executable instructions may also be loaded onto a computer or other programmable data-processing device, enabling a series of operational steps to be executed on the computer or other programmable device to produce computer-implemented processing, so that instructions executed on the computer or other programmable device provide steps for implementing functions specified in one or more flows of the flowchart and/or one or more boxes of the block diagram.

Obviously, those skilled in the art can make various changes and variations to the present disclosure without departing from the spirit and scope of the present disclosure. Thus, to the extent that these modifications and variations of the present disclosure are within the scope of the claims of the present disclosure and their technical equivalents, the present disclosure is intended to encompass such modifications and variations as well.

All embodiments of the present disclosure may be executed alone or in combination with other embodiments and are considered to be within the scope of protection of the claims of the present disclosure.

## Claims

1. A service processing method, which is applied to a target node, said method comprising:
receiving a service requirement of a service to be executed sent by a terminal;
generating, according to said service requirement, planning paths corresponding to respective service processing stages of said service to be executed; and
sending to said terminal the planning paths corresponding to said respective service processing stages,
wherein any one of said planning paths is configured to route service data of the service to be executed of said terminal to a computing power node that carries out service processing in the corresponding service processing stage.

2. The method according to claim 1, wherein a service scenario corresponding to said service to be executed is carried in said service requirement;
said generating, according to said service requirement, planning paths corresponding to the respective service processing stages of said service to be executed comprises:
dividing, according to said service scenario, the respective service processing stages corresponding to said service to be executed; and
generating, according to said service requirement, the planning paths corresponding to said respective service processing stages,
wherein the computing power node that carries out service processing in said any one of said planning paths matches said service requirement.

3. The method according to claim 1 or 2, wherein said service requirement comprises a network requirement and/or a computing power requirement,
wherein said network requirement comprises a required transmission time delay and/or a required network bandwidth;
wherein said computing power requirement comprises at least one of a type of a required computing power node, a number of required computing power node cores, and a location of a required computing power node.

4. The method according to claim 2 or 3, wherein said generating, according to said service requirement, the planning paths corresponding to said respective service processing stages comprises:
generating, for a first service processing stage in said respective service processing stages, first candidate paths between said terminal and respective candidate computing power nodes;
determining the transmission time delay and/or the network bandwidth of said respective first candidate paths and determining computing power resource information of the candidate computing power nodes corresponding to said respective first candidate paths, according to target resource information; and
determining a first planning path corresponding to said first service processing stage from said respective first candidate paths,
wherein the transmission time delay and/or the network bandwidth of said first planning path matches said network requirement, and/or the computing power resource information of the candidate computing power node corresponding to said first planning path matches said computing power requirement.

5. The method according to claim 2 or 3, wherein said generating, according to said service requirement, the planning paths corresponding to said respective service processing stages comprises:
generating, for a non-first service processing stage of said respective service processing stages, second candidate paths between the computing power node that carries out service processing in a previous service processing stage of said non-first service processing stage and respective candidate computing power nodes;
determining the transmission time delay and/or the network bandwidth of said respective second candidate paths and determining computing power resource information of the candidate computing power nodes corresponding to said respective second candidate paths, according to target resource information; and
determining a second planning path corresponding to said non-first service processing stage from said respective second candidate paths,
wherein the transmission time delay and/or the network bandwidth of said second planning path matches said network requirement, and/or the computing power resource information of the candidate computing power node corresponding to said second planning path matches said computing power requirement.

6. The method according to claim 4 or 5, wherein said target resource information comprises at least one of the following:
a status of network resources in an area under the jurisdiction of said target node;
a status of computing power resources in the area under the jurisdiction of said target node;
a status of applications deployed in the area under the jurisdiction of said target node.

7. The method according to any one of claims 2 to 6, wherein the computing power node that carries out service processing in said respective planning paths is a sub-computing power node in a virtual computing power node, said sub-computing power node comprises a virtual machine or a container.

8. A service processing method, which is applied to a terminal, said method comprising:
sending to a target node a service requirement of a service to be executed, wherein said service requirement is configured to generate planning paths corresponding to respective service processing stages of said service to be executed; and
receiving the planning paths corresponding to said respective service processing stages sent by said target node,
wherein any one of said planning paths is configured to route service data of the service to be executed of said terminal to a computing power node that carries out service processing in a corresponding service processing stage.

9. The method according to claim 8, wherein a service scenario corresponding to said service to be executed is carried in said service requirement, and said service scenario is configured to divide the respective service processing stages corresponding to said service to be executed.

10. The method according to claim 8 or 9, wherein said service requirement comprises a network requirement and/or a computing power requirement,
wherein said network requirement comprises a required transmission time delay and/or a required network bandwidth;
wherein said computing power requirement comprises at least one of a type of a required computing power node, a number of required computing power node cores, and a location of a required computing power node.

11. The method according to any one of claims 8 to 10, wherein said method further comprises:
receiving a processing result corresponding to the service data sent by the computing power node that carries out service processing in the last service processing stage of the respective service processing stages;
or,
receiving a processing result transmitted by the computing power node that carries out service processing in the last service processing stage along the planning paths corresponding to the respective service processing stages;
or,
receiving a processing result, which is sent, in accordance with a third planning path, by the computing power node that carries out service processing in the last service processing stage, wherein the third planning path is a path between the terminal and the computing power node that carries out service processing in the last service processing stage obtained by planning of the target node according to the target resource information.

12. A target node, comprising: a memory, a transceiver, and a processor, wherein
the memory is configured to store a computer program; the transceiver is configured to send and receive data under the control of said processor; and the processor is configured to read the computer program in said memory and execute the following operations of:
receiving a service requirement of a service to be executed sent by a terminal;
generating, according to said service requirement, planning paths corresponding to respective service processing stages of said service to be executed; and
sending to said terminal the planning paths corresponding to said respective service processing stages,
wherein any one of said planning paths is configured to route service data of the service to be executed of said terminal to a computing power node that carries out service processing in the corresponding service processing stage.

13. The target node according to claim 12, wherein a service scenario corresponding to said service to be executed is carried in said service requirement;
said generating, according to said service requirement, planning paths corresponding to the respective service processing stages of said service to be executed comprises:
dividing, according to said service scenario, the respective service processing stages corresponding to said service to be executed; and
generating, according to said service requirement, the planning paths corresponding to said respective service processing stages,
wherein the computing power node that carries out service processing in said any one of said planning paths matches said service requirement.

14. The target node according to claim 13, wherein said service requirement comprises a network requirement and/or a computing power requirement,
wherein said network requirement comprises a required transmission time delay and/or a required network bandwidth;
wherein said computing power requirement comprises at least one of a type of a required computing power node, a number of required computing power node cores, and a location of arequired computing power node.

15. The target node according to claim 13 or 14, wherein said generating, according to said service requirement, the planning paths corresponding to said respective service processing stages comprises:
generating, for a first service processing stage in said respective service processing stages, first candidate paths between said terminal and respective candidate computing power nodes;
determining the transmission time delay and/or the network bandwidth of said respective first candidate paths and determining computing power resource information of the candidate computing power nodes corresponding to said respective first candidate paths, according to target resource information; and
determining a first planning path corresponding to said first service processing stage from said respective first candidate paths,
wherein the transmission time delay and/or the network bandwidth of said first planning path matches said network requirement, and/or the computing power resource information of the candidate computing power node corresponding to said first planning path matches said computing power requirement.

16. The target node according to any one of claims 13 to 15, wherein said generating, according to said service requirement, the planning paths corresponding to said respective service processing stages comprises:
generating, for a non-first service processing stage of said respective service processing stages, second candidate paths between the computing power node that carries out service processing in a previous service processing stage of said non-first service processing stage and respective candidate computing power nodes;
determining the transmission time delay and/or the network bandwidth of said respective second candidate paths and determining computing power resource information of the candidate computing power nodes corresponding to said respective second candidate paths, according to target resource information; and
determining a second planning path corresponding to said non-first service processing stage from said respective second candidate paths,
wherein the transmission time delay and/or the network bandwidth of said second planning path matches said network requirement, and/or the computing power resource information of the candidate computing power node corresponding to said second planning path matches said computing power requirement.

17. The target node according to claim 15 or 16, wherein said target resource information comprises at least one of the following:
a status of network resources in an area under the jurisdiction of said target node;
a status of computing power resources in the area under the jurisdiction of said target node;
a status of applications deployed in the area under the jurisdiction of said target node.

18. The target node according to any one of claims 12 to 17, wherein the computing power node that carries out service processing in said respective planning paths is a sub-computing power node in a virtual computing power node, said sub-computing power node comprises a virtual machine or a container.

19. A terminal, comprising: a memory, a transceiver, and a processor, wherein
the memory is configured to store a computer program; the transceiver is configured to send and receive data under the control of said processor; and the processor is configured to read the computer program in said memory and execute the following operations of:
sending to a target node a service requirement of a service to be executed, wherein said service requirement is configured to generate planning paths corresponding to respective service processing stages of said service to be executed; and
receiving the planning paths corresponding to said respective service processing stages sent by said target node,
wherein any one of said planning paths is configured to route service data of the service to be executed of said terminal to a computing power node that carries out service processing in a corresponding service processing stage.

20. The terminal according to claim 19, wherein a service scenario corresponding to said service to be executed is carried in said service requirement, and said service scenario is configured to divide the respective service processing stages corresponding to said service to be executed.

21. The terminal according to claim 19 or 20, wherein said service requirement comprises a network requirement and/or a computing power requirement,
wherein said network requirement comprises a required transmission time delay and/or a required network bandwidth;
wherein said computing power requirement comprises at least one of a type of a required computing power node, a number of required computing power node cores, and a location of a required computing power node.

22. The terminal according to any one of claims 19 to 21, wherein the transceiver is further configured to execute the following operations of:
receiving a processing result corresponding to the service data sent by the computing power node that carries out service processing in the last service processing stage of the respective service processing stages;
or,
receiving a processing result transmitted by the computing power node that carries out service processing in the last service processing stage along the planning paths corresponding to the respective service processing stages;
or,
receiving a processing result, which is sent, in accordance with a third planning path, by the computing power node that carries out service processing in the last service processing stage, wherein the third planning path is a path between the terminal and the computing power node that carries out service processing in the last service processing stage obtained by planning of the target node according to the target resource information.

23. A service processing apparatus, comprising:
a receiving unit for receiving a service requirement of a service to be executed sent by a terminal;
a generating unit for generating, according to said service requirement, planning paths corresponding to respective service processing stages of said service to be executed; and
a sending unit for sending to said terminal the planning paths corresponding to said respective service processing stages,
wherein any one of said planning paths is configured to route service data of the service to be executed of said terminal to a computing power node that carries out service processing in the corresponding service processing stage.

24. A service processing apparatus, comprising:
a sending unit for sending to a target node a service requirement of a service to be executed, wherein said service requirement is configured to generate planning paths corresponding to respective service processing stages of said service to be executed; and
a receiving unit for receiving the planning paths corresponding to said respective service processing stages sent by said target node,
wherein any one of said planning paths is configured to route service data of the service to be executed of said terminal to a computing power node that carries out service processing in a corresponding service processing stage.

25. A processor-readable storage medium, on which a computer program is stored, wherein said computer program is configured to cause said processor to execute the method according to any one of claims 1 to 7, or to execute the method according to any one of claims 8 to 11.

26. A computer program product comprising a computer program, wherein said computer program, when executed by a processor, realizes the method according to any one of claims 1 to 7, or executes the method according to any one of claims 8 to 11.

27. A computer program comprising a computer program code which, when running on a computer, causes a computer to execute the method according to any one of claims 1 to 7, or to execute the method according to any one of claims 8 to 11.
